Europäisches Patentamt

European Patent Office

Office européen des brevets

(19)

(11) Publication number: **0 142 138**
**B1**

(12) # EUROPEAN PATENT SPECIFICATION

(45) Date of publication of patent specification: 26.10.88

(51) Int. Cl.⁴: **H 04 B 1/74, H 04 L 1/22**

(21) Application number: **84113522.1**

(22) Date of filing: **09.11.84**

(54) **Protection switching system for carrier transmission line.**

(30) Priority: **11.11.83 JP 212030/83**
**18.11.83 JP 217402/83**
**25.01.84 JP 11256/84**

(43) Date of publication of application:
**22.05.85 Bulletin 85/21**

(45) Publication of the grant of the patent:
**26.10.88 Bulletin 88/43**

(84) Designated Contracting States:
**DE FR GB**

(56) References cited:
**DE-B-2 525 438**
**DE-B-2 753 420**
**US-A-3 983 340**
**US-A-4 442 518**

**LINKS FOR THE FUTURE, SCIENCE, SYSTEMS
& SERVICES FOR COMMUNICATIONS, IEEE
INTERNATIONAL CONFERENCE ON
COMMUNICATIONS, May 14-17, 1984, RAI
Congress Centre, Amsterdam, T. OGAWA et al.
"405 Mb/s single-mode optical fiber
transmission system", pp. 779-782**

(73) Proprietor: **FUJITSU LIMITED**
**1015, Kamikodanaka Nakahara-ku
Kawasaki-shi Kanagawa 211 (JP)**

(72) Inventor: **Ikeuchi, Satoshi**
**2348-1-B-205, Ohzenji Asao-ku
Kawasaki-shi Kanagawa, 215 (JP)**
Inventor: **Taniguchi, Ikuo**
**337-1-201, Higashi naganuma
Inagi-shi Tokyo, 206 (JP)**

(74) Representative: **Lehn, Werner, Dipl.-Ing. et al
Hoffmann, Eitle & Partner Patentanwälte
Arabellastrasse 4
D-8000 München 81 (DE)**

Courier Press, Leamington Spa, England.

## Description

The present invention relates to a protection switching system for a digital carrier transmission line transmitting pulse code modulation bit frames having an auxiliary bit area including:

terminal stations, each including a selector for receiving auxiliary signals and means for detecting trouble on the digital carrier transmission line;

at least one main transmission line, operatively connected to said terminal stations, for transmitting main signals between said terminal stations;

means for detecting trouble on said at least one main transmission line; and

at least one stand-by line, operatively connected to said terminal stations, for transmitting signals including low priority signals and the main signal when said means detects trouble on said at least one main transmission line.

Such a system is known from US—A—3 983 340.

The invention further relates to a terminal station for use in a protection switching system in which the terminal station is operatively connected to at least two transmission lines for transmitting and receiving main and auxiliary signals, one of the transmission lines serving as a stand-by line, said terminal station including line protection switch means.

The invention further relates to a method of transmitting main and auxiliary signals over a digital carrier transmission system having terminal stations connected by transmission lines, the transmission lines including a stand-by line, said method including the step of transmitting the main signal over the transmission lines.

It is essential to provide a stand-by system to increase the reliability of a carrier transmission system, and when some trouble occurs in a working line, the signal is switched to a stand-by system to transmit the signals. Such switching is used very commonly for wireless transmission lines, since fading is inevitable in radio transmission. Therefore, frequency diversity or space diversity systems have been developed. But the situation for wired transmission line systems was slightly different, since there was no need to pay attention to the fading. The system reliability was increased by increasing the reliability of equipment or the wiring lines. But still it is necessary to provide a stand-by system or protection switching system to attain high reliability for communication systems.

In high reliability communication systems there occur other problems: one is to maintain the reliability of the stand-by system or protection switching system itself, in order that the total reliability of the system can be attained. One approach was to provide a parallel system for a signal. For example, at a transmitting terminal the signal is split to three identical signals and transmitted through three parallel lines, at a receiving terminal the received three signals are compared with each other and if a difference between them is found, then a majority law is adopted. Thus if two signals between the three are equal to each other then the other is rejected as an error.

Such a system is reliable but expensive, so it is used only for limited purposes where very high reliability is required. On the other hand, the reliability of equipment is improved to a greater extent and it became practical to provide a single stand-by system for several transmission lines, though the problem of the reliability of the stand-by system remains. Moreover, a modern multichannel transmission system, such as a light communication system, is expensive and it becomes too expensive to leave the stand-by system only for the transmission of auxiliary signals used for service or maintenance signals between the stations.

Another problem of the protection switching system is reducing the time for switching the signal from a working line to a stand-by line when trouble occurs, because the transmission is interrupted during this switching time. A "hitless" system which means even an instantaneous breakdown of the transmission line is not allowed, is a target of the modern data transmission technology.

Prior art technology

Before disclosing the present invention, a prior art technology of a protection switching system for carrier transmission line will be described briefly in order to clarify the features and advantages of the present invention.

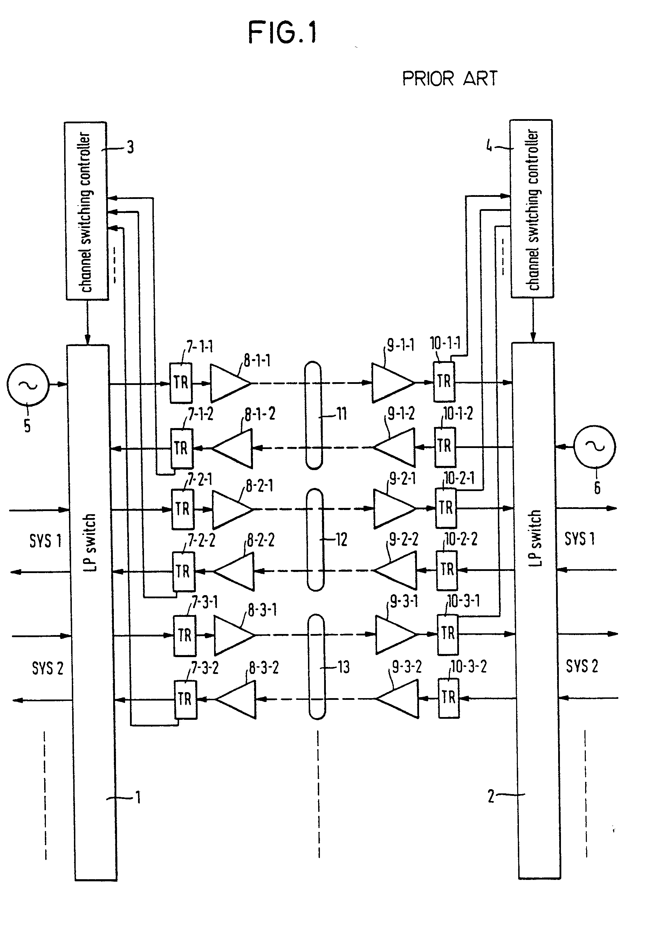

Figure 1 is a block diagram of an exemplary digital multiplex signal transmission line system comprising a protection switching system. Multiplexed telephone, television (TV) or data signals SYS-1, SYS-2 and so on are transmitted between a terminal station A and a terminal station B (they are called hereinafter as STATION A and STATION B respectively) via the transmission lines 11, 12, 13 - - -. The transmission line may be a cable, optical fiber cable or any other, and it contains the up (from STATION B to STATION A) and down (from STATION A to STATION B) signal lines. In Figure 1, the signal of SYS-1 is transmitted through a transmission line 12, and the signal of SYS-2 is transmitted through the line 13. The switching of these signals are done in a LP switch (line protection switch) 1 and 2 of each station controlled by channel switching controllers 3 and 4 respectively.

The transmission line 11 is a service line or stand-by line, through which is transmitted usually a service signal between the stations, such as the order wire signal for the maintenance service men between the stations, SC signal (supervisory and control signal) and SV signal (supervisory or surveillance signal) etc. and used for service and order between the stations. Such signals are called auxiliary signals. Sometimes the system is provided with a redundant SC signal line (not shown) between the switch controllers 3 and 4 of each station.

In the stand-by line 11 are inserted in the down word direction (from STATION A to STATION B) a terminal repeater (TR) 7-1-1, repeaters 8-1-1, 9-1-1 and a terminal repeater 10-1-1. And in the up word direction (from STATION B to STATION A) are inserted a terminal repeater 10-1-2, repeaters 9-1-2, 8-1-2 and a terminal repeater 7-1-2. They are working altogether for relaying the signals. The configuration of equipment is similar for the working lines 12, 13 and so on. Usually, the terminal repeater comprises multiplexer, demultiplexer etc. and sometimes it comprises an electro-optical converter for light transmission systems. Though it is not shown in the figure, the transmission line may further comprise repeater amplifiers or repeater stations.

The reference numerals 5 and 6 designate dummy signal generators which send dummy signals to the respective stand-by line. The dummy signal is detected by the terminal repeater of the opposite terminals in order to monitor the transmission characteristics of the stand-by line. Such dummy signal is especially effective for an optical fiber cable systems to maintain the repeaters in a predetermined condition, since the time constant of AGC (automatic gain control) for optical communication equipment is usually long compared to that of the electronic communication system.

Each receiving terminal repeater 10-1-1, 10-2-1, 10-3-1, 7-1-2, 7-2-2, t-3-2 and so on is provided with detectors to watch the input signal level, coding error, bit error equipment faults, so if trouble or an abnormal situation is detected, the terminal repeater (TR) sends an alarm to respective channel switch controller 3 or 4. Then the channel is switched by the LP switch (line protection switch) 1 or 2 under the control of the channel switch controller 3 or 4. For example if the TR 10-2-1 in the STATION B detects an abnormality indicating that a fault occurred in some part of down signal line 12 (that is a transmission system from TR 7-2-1 through line 12 to TR 10-1-1), an alarm is sent to the channel switch controller (CSC) 4. The CSC 4 sends a command to the CSC 3 in the STATION A to switch the working line 12 to the stand-by line 11. This command is sent through the stand-by line 11 or redundant SC signal line (not shown). In some recent systems the command is sent via upward working lines 12, 13 and so on using their idle channel or idle bits.

Receiving the command, the CSC 3 in the STATION A controls the LP switch 1 to switch the SYS-1 from line 12 to line 11, and when the switching is completed the CSC 3 sends the signal that the switching is completed to the CSC 4, via the redundant SC signal line (not shown) or idle channel or idle bits of downward working lines (lines 11, 13 and so on). When the signal is received by the CSC 4, it controls the LP switch 2 to switch the SYS-1 from the line 12 to the stand-by line 11.

Thus the system switching is finished. Then the dummy signal 5 and 6 are sent through the line 12 by the command of CSC 3 and 4, and the rehabilitation work of the line 12 is monitored by checking the received dummy signal at the TR 10-2-1 or 7-2-2.

Generally, a single stand-by line is enough for several working lines. But depending on the reliability required of the system, the number of stand-by line is increased. And usually, when the fault line (line 12 in this example) is repaired, the system is again switched to the former line 12, and the line 11 is reserved as a stand-by line. Such system is called a fixed protection line system. In contrast, a system called the floating protection line system keeps the restored line (line 12 in this example) as a new stand-by line, and uses the former stand-by line (line 11) as a working line. Usually, the fixed protection line system is used.

A prior art protection system is described in US—A—3 983 340, including terminal stations, main transmission lines, a stand-by line, line span switches and repeaters. The stand-by line is kept alive by a signal generator which transmits a series of "1" pulses. When a fault is detected the relevant line span switch opens and one line span switch on the stand-by line closes. The terminals are momentarily disconnected from each other. Subsequently the remaining span switches are operated following generation of the code signal "C1". The switching is not carried out until the code signal "C1" has been received for 30 microseconds or more.

DE—B2—2 753 420 describes a similar system in which the transmission is returned automatically from the stand-by line to the main transmission line after the error in the transmission line has been corrected.

Problems of the prior art

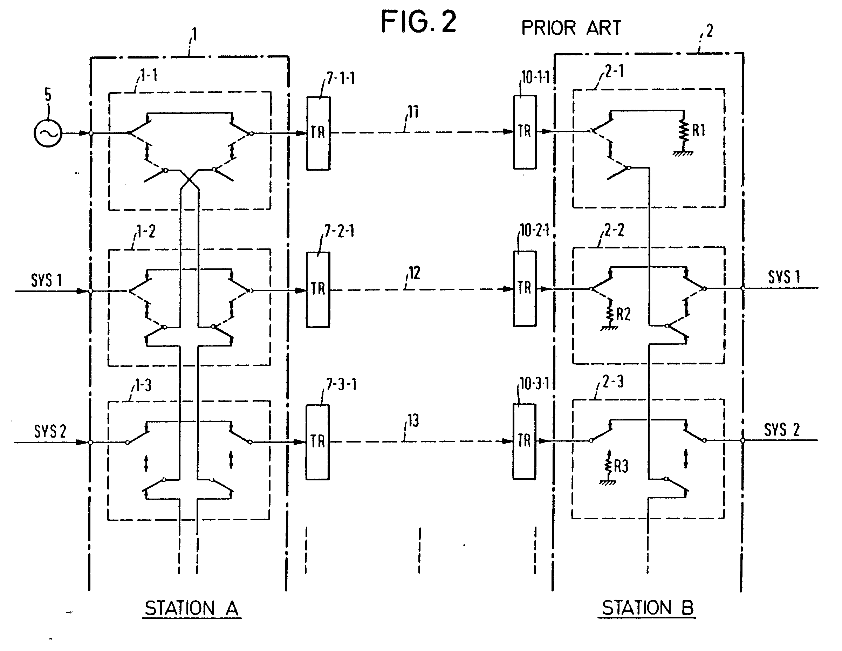

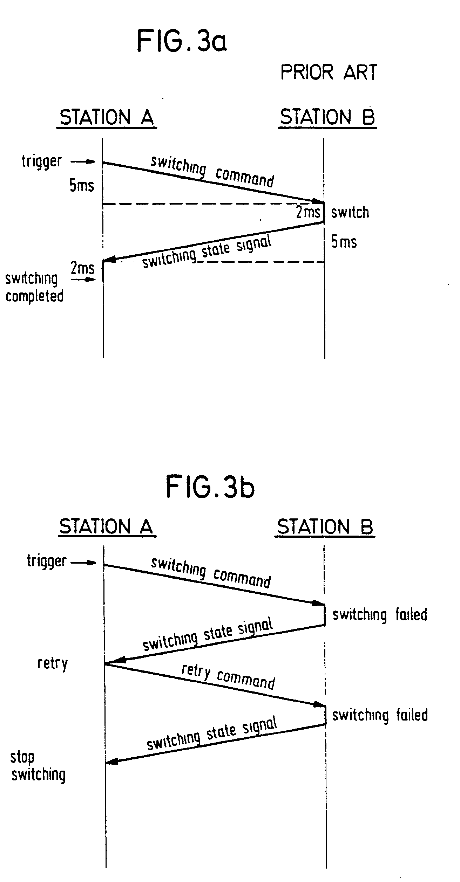

As mentioned before, one of the problem of the prior art is the reliability of the stand-by system, if the stand-by system fails, the system cannot work. Other problems will be described referring the Figures 2 and 3. In the figure like reference numerals and characters designate like or similar parts of Figure 1.

Figure 2 is a block diagram showing a main part of a prior art switching system. The figure shows only the downward system. In practice a similar circuit for upward line is used forming a pair with the downward line. The explanation will be given assuming a single stand-by and fixed protection line system. The switching elements 1-1, 1-2, 1-3 - - - and 2-1, 2-2, 2-3 - - - are formed by a mercury relay switch for example, $R_1$, $R_2$, $R_3$ - - - are resistors having the same resistance as the line impedance (usually 75 Ohms) to terminate the transmission line. In the example of Figure 2, the dummy signal generated by the dummy signal generator 5 is transmitted from the STATION A to STATION B via the line 11 (stand-by line), and terminated by the resistor $R_1$.

If trouble occurred in the working line 12, the signal of the SYS-1 is switched to the stand-by line 11 in the manner described before. In this case the contact points of the switching elements 1-1, 1-2, 2-1 and 2-2 shifts from the position shown by full lines to the position shown by broken lines, following the command of the CSC 3 and 4. Then as can be seen in the figure, signals of SYS-1 are switched from transmission line 12 to 11, and the dummy signal is switched from the stand-by line 11 to the failed line 12 and terminated by the resistor $R_2$. By analyzing the dummy signal received by TR 10-2-1, the fault point is detected and repaired.

When the trouble is removed, the working line is shifted to the line 12 and the line 11 is kept again as a stand-by line. In such a system, the terminating resistors $R_1$, $R_2$ and so on are included in the switching elements 2-1, 2-2 and so on. Therefore the signal arrived at the STATION B via the stand-by line 11 cannot be taken out from the switching elements. So it was not possible to use the stand-by line as a signal transmission line.

Recently, the transmission line system is becoming expensive as it is highly multiplexed and complicated. In such a system, the stand-by system is almost kept in an idle state, so long as a fault does not occur and a working line is not switched to the stand-by line. There arose the desire, therefore, to utilize the stand-by line as a working line. Moreover, as can be seen in Figure 2, the switching elements for the STATION A (1-1, 1-2 etc.) must be of different type from that of STATION B (2-1, 2-2 etc.), it is not desirable to provide and stock different type of parts from the view point of economy.

Another problem of the prior art is the switching time. Figure 3 is a time chart showing the sequence of the protection line switching in the prior art system. In the figure, (a) shows a normal sequence of the switching and (b) shows the sequence of the system when the switching has failed by accident. In the Figure 3, time flow is shown from up to downward in the figure, and the vertical lines show the sequence of switching which is performed in STATION A and STATION B respectively.

Referring to Figure 1 and 3, suppose the terminal repeater (TR) 7-2-2 in STATION A detects an abnormality and sends an alarm to CSC 3, which triggers switching of the line 12 to the line 11. As mentioned before, the switching command is sent from the STATION A to the STATION B. It takes about 5 ms for the command to reach to STATION B. Then the CSC 4 commands the LP switch 2 to switch the line 12 to the line 11. It takes about 2 ms for this switching. When the switching in STATION B is completed, the CSC 4 sends a signal to the STATION A that the switching is completed. It takes again about 5 ms for the signal to reach to the STATION A. After receiving this signal, the CSC 3 commands the LP switch 1 to switch the signal SYS-1 from the line 12 to line 11, thus the system switching is completed. But it takes again about 2 ms for this switching in the STATION A. Then it takes altogether approximately 14 ms for the system to switch from a working line (line 12 in this example) to the stand-by line 11.

There is a rare instance that the STATION B fails to switch the line. Figure 3(b) shows the sequence of such case. The triggering of the switching is similar to that of Figure 3(a), in the STATION B when the CSC 4 is warned by the LP switch 2 that the switching has failed by some failure of equipments or parts, the CSC 4 sends a signal that the switching has failed to the STATION A, altogether the signal indicating the switching situation. Then the CSC 3 sends a command to retry the switching to the STATION B. By this command the STATION B tries again the switching. If the switching succeeds, the following step is the same to that of Figure 3(a), in this case it will be understood that it takes about 26 ms for the switching. But if the switching has failed again, the CSC 4 sends a signal that the switching has failed, when this signal is received, the CSC 3 stops the switching and warns the operator of the situation as a matter of importance.

As has been described, it is important to reduce the switching time to reduce the loss time of the system.

An object of the present invention is to increase the reliability of a communication system by increasing the reliability of the protection switching system.

Another object of the invention is to increase the reliability of the protection system and to economize the carrier transmission system.

Another object of the present invention is to economize the transmission system by utilizing a stand-by system as a transmission line.

A further object of the present invention is to reduce switching time of a communication system from a working line to a stand-by line.

The objects of the present invention are solved for the protection switching system as detailed in the characterizing clauses of claims 1, 8 and 11; for a terminal station for use in such a protection switching system as detailed in the characterizing clause of claim 13; and for a method of transmitting main and auxiliary signals over a digital carrier system as detailed in the characterizing clause of claim 20.

The details and the advantages of the present invention will be disclosed in the following description of preferred embodiments of the invention together with the accompanying drawings. Throughout the drawings like reference numerals or characters designate the same or similar parts.

Brief description of the drawings

Figure 1 is a block diagram showing a prior art protection switching system for carrier transmission line;

Figure 2 is a block diagram showing a main part of a prior art switching system;

Figure 3 is a time chart showing the sequence of the protection line switching in prior art system, in the figure, (a) shows a normal sequence of the switching and (b) shows the sequence of the system when the switching has failed by accident;

Figure 4 is a block diagram showing a redundant SC signal system by the present invention illustrating its one way system as an embodiment;

Figure 5 is a chart illustrating a frame structure of a PCM signal;

Figure 6 is block diagram showing a main part of a switching system by the present invention;

Figure 7 is a block diagram of a channel switching controller by the present invention; and

Figure 8 is a time chart showing the squence of the protection line switching by the present invention, in the figure, (a) shows a normal sequence of the switching and (b) shows the sequence of the system when the switching has failed by accident.

As mentioned before it is important to attain high reliability of a service or control signal system of a communication system. Otherwise, the system will lose control and high reliability of the total system can not be attained. On the other word, the system reliability cannot be higher than the reliability of the service and control line system.

In order to attain high reliability of the service and control line, the present invention intends to transmit an auxiliary signal or the service signals, that is the order wire signals, SC signals (supervisory and control signals) and SV signals (supervisory or surveillance signals) both through the stand-by line and working lines in parallel. Therefore, so long as at least one line is working normally, the system never loses the control. By sending the service signals through the working line, each working line loses its channels or bit numbers, but as will be described later, the loss of the channel or bit is very small, or does not lose at all. Moreover, the present invention uses the stand-by line for transmitting a signal of lower priority, so the total channel or bits transmitted through the system is much larger than the prior art system, in which the stand-by line was kept idle except when transmitting the service signals.

Another advantage of the present invention is to reduce the switching time of the system from a working line to a stand-by line when trouble occurred. These features and advantages will be disclosed referring to some preferred embodiments.

First embodiment

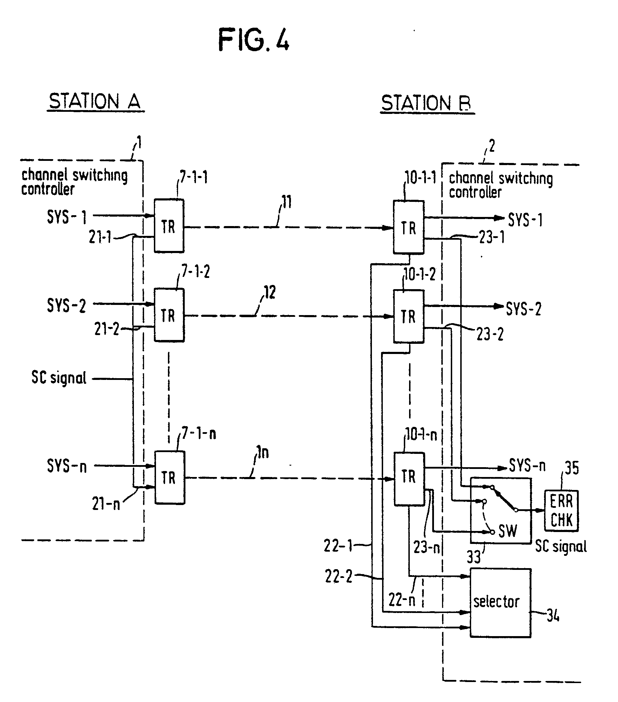

This embodiment intends to send the service signals both through the stand-by line and the working lines. The block diagram of the total system is similar to that of Figure 1. But the channel switching controller (CSC) is improved. Figure 4 shows the CSC of the present invention illustrating the structure of the portion relevant to the invention. The figure shows only the portion concerning the down signal line: similar equipment is used for the up signal line forming a pair system with this equipment.

Figure 4 is a part of a system equivalent to that of Figure 1. The system links the STATION A and STATION B with transmission lines 11, 12 - - - and 1n, altogether n transmission lines. Each line includes repeaters, terminal repeaters (TR), cables or optical fiber cables and so on as similar to that of Figure 1. In this example, the transmission line 1n is used as a stand-by line. Each station A and B is provided with a LP switch 1 and 2 respectively, and each transmission line is terminated respectively by TRs 7-1-1, 7-1-2 - - - of STATION A and TRs 10-1-1, 10-1-2 - - - of STATION B. These configurations are all similar to those in Figure 1. If necessary, the stand-by line 1n may be used as a working line to transmit signals, though the system reliability decreases because there is no stand-by line.

Unlike the system of Figure 1, the transmission lines 11, 12 - - - transmit the service signals, as shown in Figure 4, and the service signal is fed in parallel to all transmission lines through the service signal lines 21-1, 21-2, - - - 21-n in LP switch (line protection switch) 1. The method of inserting the auxiliary or service signal into or separate from the main signals of each line will be disclosed later. At the receiving station (STATION B in the example of Figure 4), these auxiliary or service signals are separated and sent respectively to the terminals of a selection switch SW of a selector 33, via the service signal lines 23-1, 23-1 - - - 23-n. As mentioned with respect to Figure 1, each TR of each station is provided with detectors to watch the input signal level, coding error, bit error or trouble of equipments, and if trouble or an abnormal situation is detected, the TR sends an alarm to a selector controller 34 via the alarm signal lines 22-1, 22-1, - - - 22-n. The selector 33 under the control of the selector controller 34, selects the contact of the selection switch SW where is no alarm, so the SC signal can be transmitted to STATION B so long as at least one transmission line is alive.

The system of Figure 4 is provided with further means to increase the reliability of the service signal. As shown in the figure, the SC signal is . further precisely watched by an error checker 35, which is operated automatically or manually, and though there is no alarm signal, the SV signals received by each TR are compared, and the selector is controlled to connect to the best transmission line. Therefore, the STATION B always receives the service signal at the best condition of the transmission line.

The switching action of the system from a working line to the stand-by line when trouble or an abnormal situation occurs, is quite similar to that of prior art system described with respect to Figure 1.

Next, how the service signals (denoted as SC signals hereinafter) are inserted into or dropped from the main signals in each TRs will be described. Such drop/insertion of SC signal is a well known and widely used technology in the art of communication, the present invention utilizes such technology, therefore, the circuit and its process of drop/insertion will not be described herein. But the details are disclosed in for example, "405 Mb/s Single-Mode Fiber Transmission System", 1984 IEEE International Conference on Communications; or "DC-400M Protection Switching Equipment Using Microprocessor", FSTJ. Vol. 16, No. 4, 1980 Dec.

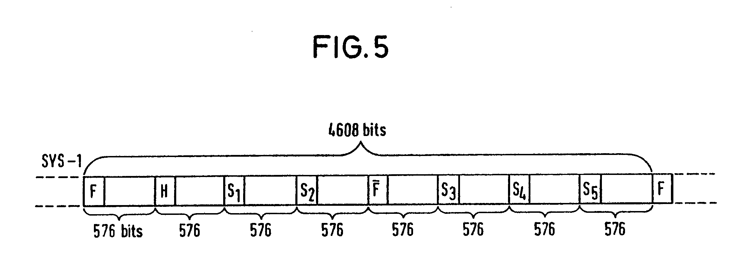

Figure 5 shows a frame structure of a PCM (pulse code modulation) signal. The figure shows a bit train of 405 Mbit PCM signal as an example. The coded input signal is arranged in a frame of 4,608 bits as shown in the figure, and transmitted with a rate of 88,000 frames per second. Each frame is further divided into eight sub-frames of 576 bits. At the head of each frame and sub-frame are provided respectively frame bits F or service bits S1, S2 - - - as shown in the figure. Bit numbers of the frame bit and service bit depend on the system design, usually 9 bits are allotted. The frame bits F are used to indicate the beginning of the frame, and sometimes an inverse frame bit F̄ (each bit of which is inverse to that of F) is inserted as shown in Figure 5, to check an error of the frame bit itself. The service bits are used to transmit signals between stations to consult each other, or for remote checking of the conditions of repeaters or equipment of each station.

Consider, as an example, a signal transmitted by a bit of the frame shown in Figure 5. It corresponds to 88 Kbit/sec which is equivalent to more than a channel of a telephone signal, so it is enough to allot few bits per frame for the SC signals. Usually one of the service bits denoted H in the figure is used for transmission of the SC signal. Therefore, as mentioned before, channels of bits in the main signal are never lost by transmitting the SC signal in parallel through the working lines. In the rare case where no service bit is allotted in the frame, the allotment of few bits in each frame means loss of less than one percent (for the case of Figure 5, it is 9/4,608).

Second embodiment

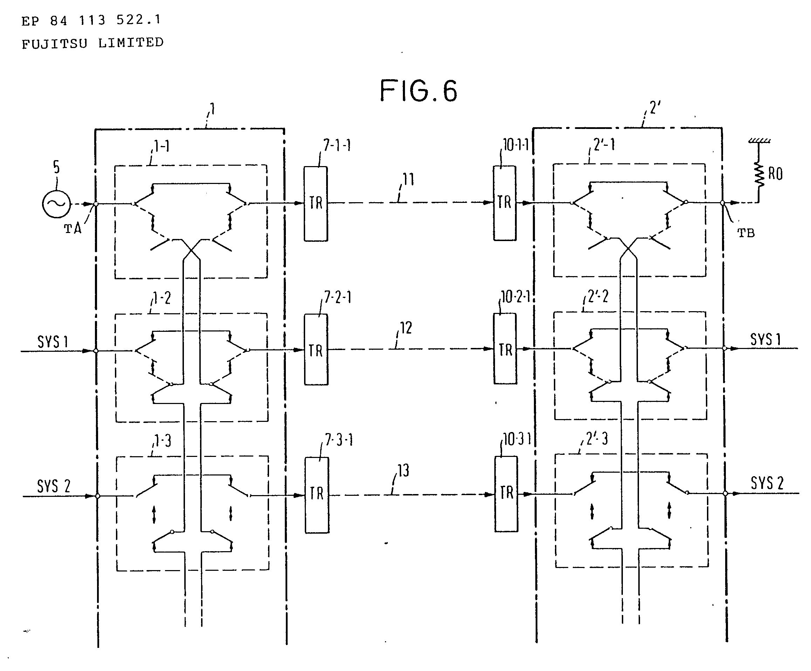

In this embodiment, the line switching equipment is improved to take out a signal from a terminating resistor, in order to transmit not only the SC signal but also the main signal through a stand-by line. Figure 6 shows a main part of the switching equipment in an LP switch improved by the present invention. The figure shows only the downward line. Like the case of Figure 2, a similar circuit for the upward line is used forming a pair with those of the downward line. The disclosure will assume a single stand-by and a fixed protection line system.

In Figure 6, like or similar reference characters or numerals designate same or corresponding parts of Figure 2. Unlike the prior art switch shown in Figure 2, the terminating resistors $R_1$, $R_2$ - - - are taken out from the switching equipment and a termination resistor $R_0$ is connected to an output terminal TB of the switching element 2'-1 of the stand-by line 11. The numeral 2' designates a switching equipment of the receiving side, which uses the same one used in the sending side switch. Therefore, the signal of the stand-by line 11 can be taken out from the output terminal TB.

In Figure 6, a dummy signal generated by a dummy signal generator 5 is transmitted through the stand-by line 11 and terminated by the terminal resistor $R_0$. If a fault occurs in the transmission line 12, for example, the contact points of the switching elements 1-1, 1-2, - - -, and 2'-1, 2'-2, - - - are shifted from the position of solid line to that of broken line, in the manner described before. So, in the STATION A, the signal of SYS-1 is switched from the working line 12 to the stand-by line 11, and the dummy signal is switched from the stand-by line 11 to the failed working line 12. At the same time in the STATION B, the signal received by the terminal repeater (TR) 10-1-1 is switched to the output of the SYS-1, and the dummy signal received by TR 10-2-1 is terminated by the termination resistor $R_0$. This switching is done under the control of the channel switching controller (not shown) in a similar manner to that described with respect to Figure 1.

The failure point is detected by analyzing the dummy signal received at the STATION B, and rehabilitation of the failed line 12 is performed by watching the dummy signal. And when the failure is repaired, the system is switched again to transmit the signal of SYS-1 through the line 12, and the line 11 is kept as a stand-by line.

As mentioned before, the stand-by line 11 may be used for transmitting a signal having a lower priority, such as a time-signal, weather forecast etc. which are transmitted at a fixed time. The priority of the signal is determined beforehand and, at the transmission stations, these low priority signals are switched manually or automatically under the command of the channel switching controller and are transmitted through the stand-by line. In the STATION A the low priority signal is fed to the input terminal TA, and taken out from the output terminal TB in the STATION B.

In such a manner, the stand-by line can be used not only for the SC signals but also for some low priority signal transmission. So, the utilization rate of the system is increased. Moreover, since the switching elements for both upward and downward LP switches are unified, it is economical from both side of manufacturing and stocking for the switching element.

The above disclosure is in respect of a fixed protection line system, but it will be easy for one skilled in the art to apply this system to a floating protection line system.

Third embodiment

This embodiment intends to decrease the switching time to switch a main signal from a working line to a stand-by line when a fault occurs in the working line. To do so, the system switches the main signal at first in a station where a fault is detected without waiting for completion of switching in the remote station. At the same time a switching command is sent to the remote station, so the switching time is reduced to about half of the prior art switching time.

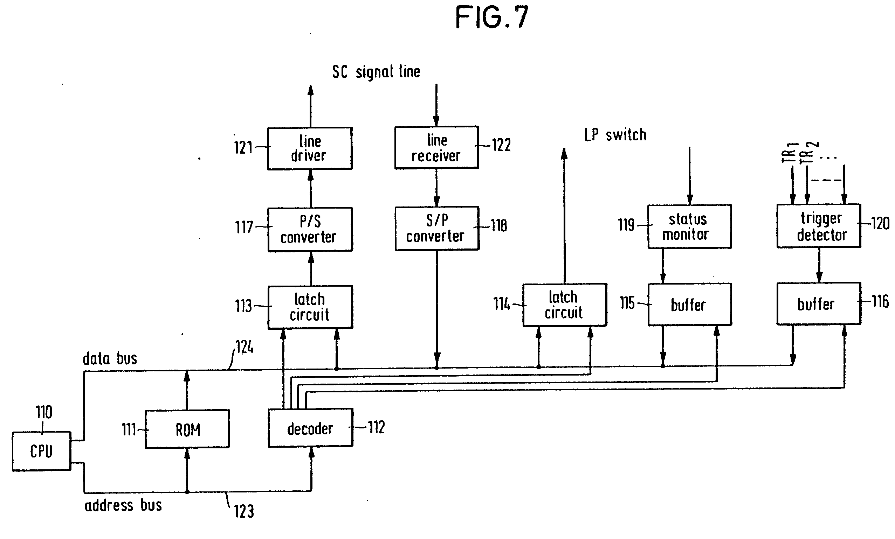

Figure 7 is a block diagram of a channel switching controller by the present invention, which corresponds to that designated by reference numerals 3 or 4 in Figure 1. The block diagram of Figure 7 shows the equipment for the STATION A. Practically the STATION B is provided with similar equipment and they are working as a pair. The system configuration is similar to that of Figure 1, except the channel switching controllers. A sequence of a switching will be described mainly with respect to the operations in the STATION A referring to Figures 1 and 7. Similarly to the foregoing examples, the main signals SYS-1, SYS-2 - - - are transmitted through the transmission lines 12, 13 - - - respectively, and the line 11 is a stand-by line.

In Figure 7, reference numeral 110 designates a CPU (central processing unit) which controls the process of channel switching controller, 111 is a ROM (read only memory) which stores the programs for switching, and 112 is a decoder which assigns the addresses corresponding the signal sent from the CPU 110 via an address bus 123. The CPU 110 sends a command to the decoder 112 to assign the address of each buffer memory 115 and 116 to read out the data stored in them in proper timing, so that the data are taken out successively to the data bus 124. When the system is operating in normal state, the contents of the buffer memories 114 and 115 are indicating that the state is in normal state, and the CPU 110 recognizes it.

A trigger detector 120 receives a trigger signal from each TRs (terminal repeaters). Suppose that the terminal repeater (TR) 7-2-2 in the STATION A has detected a fault and sends a trigger signal, the trigger detector 120 of the channel switching controller 3 discriminates which TR is sending the trigger signal, and store the data in the buffer circuit 116. The CPU 110 reads this signal via the buffer amplifier 116 and a data bus 124. Recognizing that a fault occurred, the CPU 110 selects a switching program stored in the ROM 111. The switching program comprises a program for own station (STATION A) and for opposite station (STATION B), and the former is latched in a latch circuit 114 and the latter is latched in a latch circuit 113.

The latched program in the latch circuit 114 is sent to the LP switch 1 of the STATION A, and commands it to switch the signal of SYS-1 from the transmission line 12 to a stand-by line 11. When the switching is completed, the status monitor 119 sends a signal indicating that the transmission line is switched, by this signal the memory in the buffer circuit 115 is altered, and the CPU 110 recognizes it through the data bus 124.

Meanwhile, the switching program latched in the latch circuit 113 is converted to a serial signal by a P/S converter (parallel to serial converter) 117 and sent out to the channel switching controller 4 of the opposite station (STATION B) by a line driver 121 via a SC signal line (which is the stand-by line 11 in this example).

In the opposite station (STATION B), the same equipments as shown in Figure 7 are provided, therefore, the description hereinafter will be referred to the equipment shown in Figure 7, although it relates to the STATION B. The switching command from the STATION A is received by a line receiver 122 and converted to a parallel signal by a S/P converter (serial to parallel converter) 118 and sent to the CPU 110 via the data bus 124.

CPU 110 of the STATION B selects a switching program stored in the ROM 111 and latches it in the latch circuit 114, and command the LP switch 4 of the STATION B to switch the SYS-1 from the line 12 to the stand-by line 11. When the switching is completed, the CPU 110 recognizes it through the status monitor 119 and a buffer memory 115, and takes out a signal stored in the ROM 111 indicating that the switching is completed. It should be pointed out that at this instant the SYS-1 is switched from the failed transmission line 12 to a stand-by line 11, and the transmission of main signal is recovered. The following sequences are only to confirm between each STATIONS A and B that the switching is completed. This signal is latched by the latch circuit 113, and sent to the STATION A by the line driver 121 via SC signal line, after being converted to a serial signal by the P/S converter 117.

Though it is not shown in the figure, the SC signal line is kept always in good condition applying the system described with respect to the embodiments 1 or 2 of the present invention. In the STATION A, the signal from the STATION B indicating that the switching is completed is received by the line receiver 122, and converted to a parallel signal by the S/P converter 118 and sent to the CPU 110 via the data bus 124. The sequence is completed by recognition of the state by CPU 110.

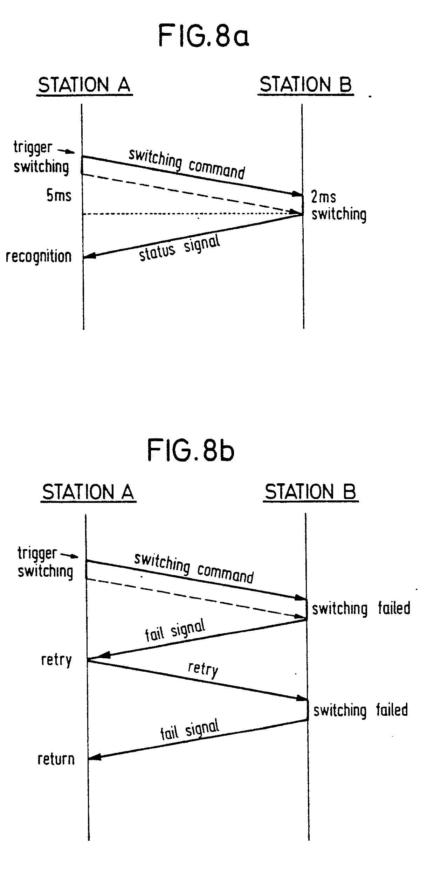

How the time for protection line switching is reduced by the above sequence will be explained referring Figure 8, which shows the time sequence of the switching. The time flow is shown from up to downward in the figure, and vertical lines in the figure show the sequence which is performed in STATION A and STATION B respectively.

Figure 8(a) shows a case wherein the switching is completed successfully. Similarly to the above disclosure, suppose that in the STATION A the triggering of the switching has occurred, the CPU 110 of the STATION A commands the LP switch 1 of own station to switch the SYS-1 to the stand-by line, at the same time the command is sent to the STATION B. It will take approximately 5 ms for the command signal to reach to the STATION B and the switching in each station takes approximately 2 ms. As soon as the switching in the STATION A is completed, the main signal is sent to the STATION B via the stand-by line (shown by a broken line), in the STATION B the switching is finished in approximately 2 ms, so the STATION B is ready to receive the main signal when it arrives, therefore, the total switching time is approximately 7 ms. The following sequence is to certify between each station that the switching is completed successfully. The STATION B sends a signal to the STATION A that the switching is completed. It takes more than 5 ms for the STATION A to recognize that switching is performed correctly. Comparing to Figure 3(a), the switching time is reduced effectively to about half that of the prior system.

Figure 8(b) shows a sequence for the very rare case wherein the switching has failed due to a failure of equipment or parts of the system. In the STATION A the switching is triggered, in the same manner described with respect to Figure 8(a), the STATION A switches its LP switch and at the same time a switching command is sent to the STATION B. Receiving this command, the CPU 110 of the STATION B commands the switching of the LP switch. But if the switching has not been done correctly, due to the failure of equipment, the status monitor 119 detects it and send a fail signal to the buffer circuit 115, and the CPU 110 recognizes that the switching was not done correctly. Then the CPU 110 selects a fail signal out of the ROM 111. This fail signal is sent to the STATION A via the latch circuit 113, the P/S converter 117, the line driver 121, and the SC signal line.

Meanwhile, the main signal is sent from the STATION A to the STATION B, but the STATION B cannot receive the signal. In the STATION A the fail signal is received by the line receiver 122 and sent to the CPU via the S/P converter 118 and the data bus 124. The CPU 110 of the STATION A recognizes that the switching has not been completed in a correct manner, then the CPU selects a retry command out of the ROM 111, and sends it to the STATION B through the latch circuit 113, the P/S converter 117, and the line driver 121 via the SC signal line. Receiving this signal, the CPU of the STATION B selects a retry program out of the ROM 111, and commands the switching of the LP switch again like a similar manner described above.

When the switching is completed correctly, the following sequences are the same as those of the Figure 8(A), but if the switching has failed again, the CPU of the STATION B recognizes it, and sends a fail signal again to the CPU of the STATION A in a similar manner as described above. So, the CPU or the STATION A recognizes that the switching has failed again. Then it selects a program to go back to the initial states from the ROM 111, and commands the LP switch to go back to the initial state. The system goes back to the initial state and stops. At the same time the CPU sends an alarm to the operator.

As has been described above, the present invention provides higher reliability of a protection switching system and reduces the switching time for the protection line. Moreover, it economizes the transmission system utilizing a stand-by system for transmission of main signals.

Above disclosure has been given emphasizing the process sequences which are interest with respect to the present invention, but all the equipments and parts concerning them are all conventional for transmission technology, so the details of the equipment and its performance are omitted for simplicity. Therefore, there will occur modifications or applications for the one skilled in the art, but they are all within the scope of the present invention.

It will be clear that the present invention can be applied not only for cable transmission line or optical fiber cable line, but it can be applied for radio transmission line.

## Claims

1. A protection switching system for a digital carrier transmission line transmitting pulse code modulation bit frames having an auxiliary bit area (H) including:

terminal stations (A, B), each including a selector (33) for receiving auxiliary signals and means for detecting trouble on the digital carrier transmission line;

at least one main transmission line (11, 12 - - - 1n), operatively connected to said terminal stations (A, B), for transmitting main signals between said terminal stations (A, B);

means for detecting trouble (TR) on said at least one main transmission line (11, 12 - - - 1n); and

at least one stand-by line (11 - - - 1n), operatively connected to said terminal stations (A, B), for transmitting the main signal when said means (TR) detects trouble on said at least one main transmission line (11, 12 - - - 1n),

characterized in that the system is adapted so that the auxiliary signals between said terminal stations (A, B) are transmitted in parallel using at least two lines among said at least one main transmission line (11, 12 - - - 1n), and said at least one stand-by line (11 - - - 1n) utilizes the auxiliary bit area (H) of the pulse code modulation bit frames, and the selector (33) selects the auxiliary signals received over one of said stand-by line (11 - - - 1n) and said main transmission line (11, 12 - - - 1n) which is operating normally.

2. A protection switching system according to claim 1, characterized in that the auxiliary signals between said terminal stations (A, B) include a control signal.

3. A protection switching system according to claim 1 or 2, characterized in that the auxiliary signals between said terminal stations (A, B) include a supervisory signal.

4. A protection switching system according to any one of the claims 1 to 3, characterized in that the auxiliary signals between said terminal stations (A, B) include an order wire telephone maintenance signal.

5. A protection switching system according to any one of the claims 1 to 4, characterized in that each of said terminal stations (A, B) further comprises an error checker (35), operatively connected to said main transmission lines (11, 12 - - - 1n) and stand-by lines (11 - - - 1n) for comparing the auxiliary signals and selecting a best signal.

6. A protection switching system according to any one of the claims 1 to 5, characterized by means for transmitting a low priority signal among the main signals over said stand-by line (11 - - - 1n).

7. A protection switching system according to any one of claims 1 to 6, characterized by means for ordinarily transmitting a low priority signal among said main signals over said stand-by line (11 - - - 1n) and for transmitting the low priority signal over the failed transmission line when said detection means (TR) detects trouble in the failed transmission line.

8. A protection switching system for a digital carrier transmission line, including:

at least one main transmission line (11, 12 - - - 1n) for transmitting a main signal;

at least one stand-by line (11 - - - 1n) for transmitting signals including low priority signals and the main signal when one of said at least one main transmission line (11, 12 - - - 1n) is in trouble; and

terminal stations (A, B) for sending and receiving the main signal, each of said terminal stations (A, B) comprising:

means for detecting trouble (TR) on said at least one main transmission line (11, 12 - - - 1n);

a line protection switch (1, 2), operatively connected to said main transmission and stand-by lines (11 - - - 1n), for switching said main transmission and stand-by lines (11 - - - 1n), said line protection switch (1, 2) having a terminal (TB) for outputting the signals received by said terminal stations (A, B) over said stand-by line (11 - - - 1n);

characterized by a dummy signal generator (5, 6), operatively connected to said line protection switch (1, 2), for providing said stand-by line (11 - - - 1n) with a dummy signal to be transmitted with the low priority signals.

9. A protection switching system according to claim 8, characterized in that each of said line protection switches (1, 2) comprises switching elements (1-1, 1-2 - - - 1-n; 2'-1, 2'-2 - - - 2'-n), operatively connected to said main transmission and stand-by lines (11, 12 - - - 1n), which are identical for both the sending and receiving performed in said terminal stations (A, B).

10. A protection switching system according to any one of the claim 8 or 9, characterized in that each of said terminal stations (A, B) further comprises a termination resistor ($R_0$), operatively connected to the terminal (TB) which outputs the signals sent over said stand-by line (11 - - - 1n).

11. A protection switching system for a digital carrier transmission line, including:

main transmission lines for transmitting a main signal;

at least one stand-by line (11 - - - 1n) for transmitting the main signal when one of said main transmission lines (11, 12 - - - 1n) is in trouble; and

terminal stations (A, B), operatively connected to said main transmission and stand-by lines (11, 12 - - - 1n), for detecting trouble in a failed one of said main transmission lines (11, 12 - - - 1n),

characterized in that a commanding station (A, B) among said terminal stations (A, B) is adapted to switch the failed one of said main transmission lines (11, 12 - - - 1n) to said stand-by line (11 - - - 1n) and simultaneously to command an opposite terminal station (B, A) to perform a switching operation of the failed one of said main transmission lines (11, 12 - - - 1n) and said stand-by line (11 - - - 1n), the opposite terminal station (B, A) is adapted to send a status signal to the commanding station (A, B) which is commanding the switching operation, the commanding station (A, B) is adapted to reverse the switching of the failed one of said main transmission lines (11, 12 - - - 1n) and said stand-by line (11 - - - 1n), when the status signal is received with an indication that the opposite terminal station (B, A) did not switch the failed one of said main transmission lines (11, 12 - - - 1n) and said stand-by line (11 - - - 1n).

12. A protection switching system according to claim 11, characterized in that if the status signal indicates that the switching operation failed, the commanding terminal station (A, B) commands the opposite one of said terminal stations (B, A) to retry the switching operation, and if the switching operation fails twice consecutively, the commanding terminal station (A, B) commanding the switching operation stops the switching operation, then reverses the switching of the failed one of said main transmission lines (11, 12 - - - 1n) and said stand-by line (11 - - - 1n).

13. A terminal station (A, B) operatively connected to at least two transmission lines (11, 12 - - - 1n) for transmitting and receiving main and auxiliary signals in a digital carrier transmission system, one of the transmission lines (11, 12 - - - 1n) serving as a stand-by line, said terminal station (A, B) including:

line protection switch means (1, 2) characterized by said line protection switch means (1, 2) being adapted to switch the main signal onto a main one of the transmission lines (11, 12 - - - 1n) and the auxiliary signal onto at least two of the transmission lines (11, 12 - - - 1n) including the main one and the stand-by line; and

channel switching control means (3, 4) for controlling the switching of said line protection switch means (1, 2).

14. A terminal station (A, B) according to claim 13, characterized in that said line protection switch means (1, 2) comprises a selector (33), operatively connected to the transmission lines (11, 12 - - - 1n) for selecting one of the auxiliary signals to be supplied to said channel switching control means (3, 4).

15. A terminal station (A, B) according to claim 14, characterized by error check means (35) for checking the auxiliary signal for errors and for controlling said selector (33).

16. A terminal station (A, B) according to any of the claims 13 to 15, characterized in that said terminal station (A, B) is connected via transmission lines (11, 12 - - - 1n) to a remote terminal station (B, A) which generates a first dummy signal, said terminal station (A, B) further comprising:

a dummy signal generator (5, 6), operatively connected to said line protection switch means (1, 2) for generating a second dummy signal; and

a termination resistor (R$_0$) for terminating the first dummy signal, and

said line protection means (1, 2) comprises:

identical switching elements (1'-1 --- 1'-n; 2'-1 --- 2'-n), operatively connected to said transmission lines (11, 12 --- 1n), for switching the main and auxiliary signals being transmitted and received; and a terminal (TB), operatively connected to said termination resistor (R$_0$) for outputting the first dummy signal to said termination resistor (R$_0$).

17. A terminal station according to any one of claims 13 to 16, characterized in that said terminal station (A, B) is connected via the transmission lines (11, 12 --- 1n) to a remote terminal station (B, A), having a remote line protection switch means (2, 1), and

said channel switching control means (3, 4) comprises:

failure detection means (TR) for detecting a failure in a failed one of the transmission lines (11, 12 --- 1n);

local line protection switch command means (114) for controlling switching of said line protection switch means (1, 2) to switch the failed one of the transmission lines (11, 12 --- 1n) and the stand-by line (11 --- 1n);

remote line protection switch command means (113) for controlling switching of the remote line protection switch means (2, 1) to switch the failed one of the transmission lines (11, 12 --- 1n) and the stand-by line (11 --- 1n);

status means (119) for receiving local and remote status signals indicating whether the switching of the failed one of said transmission lines (11, 12 --- 1n) and the stand-by line (11 --- 1n) in said line protection switch means (1, 2) and the remote line protection switch means (2, 1) was successful; and

processing means (110), operatively connected to said failure detection means (TR), said local and remote line protection switch command means (114, 113) and said status means (119), for controlling the local and remote line protection switch command means (114, 113) to simultaneously command said line protection switch means (1, 2) and the remote line protection switch means (2, 1) to switch the failed one of the transmission lines (11, 12 --- 1n) and the stand-by line (11 --- 1n) and for reversing the switching of the failed one of the transmission lines (11, 12 --- 1n) and the stand-by line (11 --- 1n), when one of the local and remote status signals indicates that the switching was unsuccessful.

18. A terminal station (A, B) according to claim 17, characterized in that said processing means (110) controls the remote line protection switch command means (113) to issue a retry command to the remote line protection switch means (2, 1), if the remote status signal indicates that the remote line protection switch means (1, 2) failed to switch the failed one of the transmission line (11, 12 --- 1n) and the stand-by line (11 --- 1n).

19. A terminal station (A, B) according to claim 13 or 17, characterized in that the main signals include a low priority signal, and said terminal station (A, B) further comprises means for transmitting the low priority signal together with the auxiliary signal over the stand-by line (11 --- 1n).

20. A method of transmitting main and auxiliary signals over a digital carrier transmission system having terminal stations (A, B) connected by transmission lines (11, 12 --- 1n), the transmission lines (11, 12 --- 1n) including a stand-by line (11 --- 1n), said method including the step of:

transmitting the main signal over the transmission lines (11, 12 --- 1n); characterized by the steps of:

(a) transmitting the auxiliary signal over at least two of the transmission lines (11, 12 --- 1n) including the stand-by line (11 --- 1n);

(b) receiving the main and auxiliary signals from the transmission lines (11, 12 --- 1n) as a received main signal and received auxiliary signals; and

(c) selecting one of the received auxiliary signals as a best received auxiliary signal.

**Patentansprüche**

1. Überwachungsschaltsystem für eine digitale Trägerübertragungsleitung, die Impulscodemodulations - Bitrahmen mit einem Hilfs-Bitbereich (H) überträgt, mit

Endstationen (A, B), die jeweils einen Wähler (33) zum Empfangen von Hilfssignalen und Mittel zum Erfassen von Störungen auf der digitalen Trägerübertragungsleitung enthalten;

wenigstens einer mit den Endstationen (A, B) zum Betrieb verbundenen Hauptübertragungsleitung (11, 12 --- 1n) zum Übertragen von Hauptsignalen zwischen den Endstationen (A, B);

Mittel (TR) zum Erfassen von Störungen auf der wenigstens einen Hauptübertragungsleitung (11, 12 --- 1n) und

wenigstens einer mit den Endstationen (A, B) zum Betrieb verbundenen Bereitschaftsleitung (11 --- 1n) zum Übertragen des Hauptsignals, wenn die Mittel (TR) Störungen auf der wenigstens einen Hauptübertragungsleitung (11, 12 --- 1n) erfassen,

dadurch gekennzeichnet, daß das System derart angepaßt ist, daß die Hilfssignale zwischen den Endstationen (A, B) unter Verwendung von wenigstens zwei Leitungen der wenigstens einen Hauptübertragungsleitung (11, 12 --- 1n) parallel übertragen werden und die wenigstens eine Bereitschaftsleitung (11 --- 1n) Hilfs-Bitbereichs (H) des Impulscodemodulations - Bitrahmens benützt, und daß der Wähler (33) die Hilfssignale auswählt, die über eine der Bereitschaftsleitungen (11 --- 1n) und die Hauptübertragungsleitung (11, 12 --- 1n) empfangen werden, die normal arbeitet.

2. Überwachungsschaltsystem nach Anspruch 1, dadurch gekennzeichnet, daß die Hilfssignale zwischen den Endstationen (A, B) ein Steuersignal enthalten.

3. Überwachungsschaltsystem nach Anspruch 1 oder 2, dadurch gekennzeichnet, daß die Hilfssignale zwischen den Endstationen (A, B) ein Überwachungssignal enthalten.

4. Überwachungsschaltsystem nach einem der Ansprüche 1 bis 3, dadurch gekennzeichnet, daß die Hilfssignale zwischen den Endstationen (A, B) ein Dienstleitungstelefon - Wartungssignal enthalten.

5. Überwachungsschaltsystem nach einem der Ansprüche 1 bis 4, dadurch gekennzeichnet, daß jede der Endstationen (A, B) weiter eine Fehlerüberwachungsvorrichtung (35) enthält, die mit der Hauptübertragungsleitung (11, 12 - - - 1n) und den Bereitschaftsleitungen (11 - - - 1n) zum Vergleichen der Hilfssignale und zum Auswählen eines besten Signals verbunden ist.

6. Überwachungsschaltsystem nach einem der Ansprüche 1 bis 5, gekennzeichnet durch Mittel zum Übertragen eines Niedrigprioritätssignals unter den Hauptsignalen über die Bereitschaftsleitung (11 - - - 1n).

7. Überwachungsschaltsystem nach einem der Ansprüche 1 bis 6, gekennzeichnet durch Mittel zum normalerweise Übertragen eines Niedrigprioritätssignals unter den Hauptsignalen über die Bereitschaftsleitung (11 - - - 1n) und zum Übertragen des Niedrigprioritätssignals über die gestörte Übertragungsleitung, wenn die Erfassungsmittel (TR) Störungen in der gestörten Übertragungsleitung feststellen.

8. Überwachungsschaltsystem für eine digitale Trägerübertragungsleitung mit

wenigstens einer Hauptübertragungsleitung (11, 12 - - - 1n) zum Übertragen eines Hauptsignals;

wenigstens einer Bereitschaftsleitung (11 - - - 1n) zum Übertragen von Signalen einschließlich Niedrigprioritätssignalen und des Hauptsignals, wenn eine der wenigstens einen Hauptübertragungsleitung (11, 12 - - - 1n) Störungen aufweist; und

Endstationen (A, B) zum Senden und Empfangen des Hauptsignals, wobei jede der Endstationen (A, B) folgendes enthält:

Mittel (TR) zum Erfassen von Störungen auf der wenigstens einen Hauptübertragungsleitung (11, 12 - - - 1n);

einen mit den Hauptübertragungs- und Bereitschaftsleitungen (11 - - - 1n) zum Betrieb verbundenen Leitungsschutzschalter (1, 2) zum Schalten der Hauptübertragungs- und Bereitschaftsleitungen (11 - - - 1n), wobei der Leitungsschutzschalter (1, 2) einen Anschluß (TB) zum Abgeben der von den Endstationen (A, B) empfangenen Signale über die Bereitschaftsleitung (11 - - - 1n) aufweist,

gekennzeichnet durch einen mit dem Leitungsschutzschalter (1, 2) zum Betrieb verbundenen Pseudosignalgenerator (5, 6) zum Zuführen eines mit den Niedrigprioritätssignalen zu übertragenden Pseudosignals zu der Bereitschaftsleitung (11 - - - 1n).

9. Überwachungschaltsystem nach Anspruch 8, dadurch gekennzeichnet, daß jeder der Leitungsschutzschalter (1, 2) Schaltelemente (1-1, 1-2 - - -

1-n, 2'-1, 2'-2 - - - 2'-n), die mit den Hauptübertragungs- und Bereitschaftsleitungen (11, 12 - - - 1n) zum Betrieb verbunden sind, enthält, welche sowohl zum in den Endstationen (A, B) durchgeführten Senden als auch Empfangen identisch sind.

10. Überwachungsschaltsystem nach einem der Ansprüche 8 oder 9, dadurch gekennzeichnet, daß jede der Endstationen (A, B) weiter einen mit dem Anschluß (TB) zum Betrieb verbundenen Abschlußwiderstand ($R_0$) enthält, welcher die über die Bereitschaftsleitung (11 - - - 1n) gesendeten Signale abgibt.

11. Überwachungsschaltsystem für eine digitale Trägerübertragungsleitung mit

Hauptübertragungsleitungen zum Übertragen eines Hauptsignals;

wenigstens einer Bereitschaftsleitung (11 - - - 1n) zum Übertragen des Hauptsignals, wenn eine der Hauptübertragungsleitungen (11, 12 - - - 1n) Störungen aufweist; und

Endstationen (A, B), die mit den Hauptübertragungs- und Bereitschaftsleitungen (11, 12 - - - 1n) zum Betrieb verbunden sind, zum Erfassen von Störungen in einer ausgefallenen Hauptübertragungsleitung (11, 12 - - - 1n), dadurch gekennzeichnet,

daß eine Befehlsstation (A, B) unter den Endstationen (A, B) ausgebildet ist, die ausgefallene Hauptübertragungsleitung (11, 12 - - - 1n) auf die Bereitschaftsleitung (11 - - - 1n) umzuschalten und gleichzeitig einer entgegengesetzten Endstation (B, A) zu befehlen, einen Schaltvorgang der ausgefallenen Hauptübertragungsleitung (11, 12 - - - 1n) und der Bereitschaftsleitung (11 - - - 1n) durchzuführen,

daß die entgegengesetzte Endstation (B, A) ausgebildet ist, ein Statussignal zu der Befehlsstation (A, B) zu senden, die den Schaltvorgang befiehlt,

daß die Befehlsstation (A, B) ausgebildet ist, das Umschalten der ausgefallenen Hauptübertragungsleitung (11, 12 - - - 1n) und der Bereitschaftsleitung (11 - - - 1n) umzusteuern, wenn das Statussignal mit einem Hinweis empfangen wird, daß die entgegengesetzte Endstation (B, A) die ausgefallene Hauptübertragungsleitung (11, 12 - - - 1n) und die Bereitschaftsleitung (11 - - - 1n) nicht umgeschaltet hat.

12. Überwachungsschaltsystem nach Anspruch 11, dadurch gekennzeichnet, daß, wenn das Statussignal den Hinweis enthält, daß der Schaltvorgang fehlgeschlagen ist, die befehlende Endstation (A, B) der entgegengesetzten Endstation (B, A) ein Wiederholen des Schaltvorgangs befiehlt, und, wenn der Schaltvorgang zweimal nacheinander fehlschlägt, die den Schaltvorgang befehlende Endstation (A, B) den Schaltvorgang unterbricht und dann das Schalten der ausgefallenen Hauptübertragungsleitung (11, 12 - - - 1n) und der Bereitschaftsleitung (11 - - - 1n) umsteuert.

13. Endstation (A, B), die mit wenigstens zwei Übertragungsleitungen (11, 12 - - - 1n) zum Übertragen und Empfangen von Haupt- und Hilfssignalen in einem digitalen Trägerübertragungssystem zum Betrieb verbunden ist, wobei eine der Übertragungleitungen (11, 12 - - - 1n) als eine Bereitschaftsleitung dient und die Endstation (A, B) Leitungsschutzschaltermittel (1, 2) enthält,

dadurch gekennzeichnet, daß die Leitungsschaltermittel (1, 2) ausgebildet sind, das Hauptsignal auf eine Hauptleitung der Übertragungsleitungen (11, 12 - - - 1n) und das Hilfssignal auf wenigstens zwei der Übertragungsleitungen (11, 12 - - - 1n) einschließlich der Haupt- und Bereitschaftsleitung zu schalten; und

daß eine Kanalschaltsteuervorrichtung (3, 4) zum Steuern des Schaltens der Leitungsschutzschaltermittel (1, 2) vorgesehen ist.

14. Endstation (A, B) nach Anspruch 13, dadurch gekennzeichnet, daß die Leitungsschaltermittel (1, 2) einem mit den Übertragungsleitungen (11, 12 - - - 1n) zum Betrieb verbundenen Wähler zum Auswählen eines der Kanalschaltsteuervorrichtung (3, 4) zuzuführenden Hilfssignals enthalten.

15. Endstation (A, B) nach Anspruch 14, gekennzeichnet durch Fehlerüberprüfungsmittel zum Überprüfen des Hilfssignals auf Fehler und zum Steuern des Wählers (33).

16. Endstation (A, B) nach einem der Ansprüche 13 bis 15, dadurch gekennzeichnet, daß die Endstation (A, B) über Übertragungsleitungen (11, 12 - - - 1n) mit einer entfernten, ein erstes Pseudosignal erzeugenden Endstation (B, A) verbunden ist, wobei die Endstation (A, B) weiter enthält:

einen Pseudosignalgenerator (5, 6), der mit den Leitungsschutzschaltermitteln (1, 2) zum Erzeugen eines zweiten Pseudosignals zum Betrieb verbunden ist;

einen Abschlußwiderstand (R_0) zum Abschließen des ersten Pseudosignals; und

daß die Leitungsschutzmittel (1, 2) identische Schaltelemente (1'-1 - - - 1'-n; 2'-1 - - - 2'-n), die mit den Übertragungsleitungen (11, 12 - - - 1n) zum Betrieb verbunden sind, zum Schalten der Haupt- und Hilfssignale, die gesendet und empfangen werden; und einen Anschluß (TB) enthalten, der mit dem Abschlußwiderstand (R_0) zum Abgeben des ersten Pseudosignals an den Abschlußwiderstand (R_0) zum Betrieb verbunden ist.

17. Endstation nach einem der Ansprüche 13 bis 16, dadurch gekennzeichnet, daß die Endstation (A, B) über die Übertragungsleitungen (11, 12 - - - 1n) mit einer entfernte Leitungsschutzschaltermittel (2, 1) aufweisenden Endstation (B, A) verbunden ist,

und daß die Kanalschaltsteuervorrichtung (3, 4) enthält:

Störungserfassungsmittel (TR) zum Erfassen einer Störung in einer ausgefallenen Übertragungsleitung (11, 12 - - - 1n);

lokale Leitungsschutzschalterbefehlsmittel (114) zum Steuern des Schaltens der Leitungsschutzschaltermittel (1, 2) zum Schalten der ausgefallenen Übertragungsleitung (11, 12 - - - 1n) und der Bereitschaftsleitung (11 - - - 1n);

entfernte Leitungsschutzschalterbefehlsmittel (113) zum Steuern des Schaltens der entfernten Leitungsschutzschaltermittel (2, 1), zum Schalten der ausgefallenen Übertragungsleitung (11, 12 - - - 1n) und die Bereitschaftsleitung (11 - - - 1n);

eine Statusvorrichtung (119) zum Empfangen von lokalen und entfernten Statussignalen, die darauf hinweisen, ob das Schalten der ausgefallenen Übertragungsleitung (11, 12 - - - 1n) und der Bereitschaftsleitung (11 - - - 1n) in den Leitungsschutzschaltermitteln (1, 2) und den entfernten Leitungsschutzschaltermitteln (2, 1) erfolgreich war; und

Verarbeitungsmittel (110), die mit den Störungserfassungsmitteln (TR), den lokalen und entfernten Leitungsschutzschalterbefehlsmitteln (114, 113) und der Statusvorrichtung (119) zum Betrieb verbunden sind, zum Steuern der lokalen und entfernten Leitungsschutzschalterbefehlsmittel (114, 113), um den Leitungsschutzschaltermitteln (1, 2) und den entfernten Leitungsschutzschaltermitteln (2, 1) gleichzeitig Befehle zu geben zum Schalten der ausgefallenen Übertragungsleitung (11, 12 - - - 1n) und der Bereitschaftsleitung (11 - - - 1n) und zum Umsteuern des Schaltens der ausgefallenen Übertragungsleitung (11, 12 - - - 1n) und der Bereitschaftsleitung (11 - - - 1n), wenn eines der lokalen und entfernten Statussignale darauf hinweist, daß das Schalten nicht erfolgreich war.

18. Endstation (A, B) nach Anspruch 17, dadurch gekennzeichnet, daß die Verarbeitungsmittel (110) die entfernten Leitungsschutzschalterbefehlsmittel (113) steuern, um einen Wiederholungsbefehl zu den entfernten Leitungsschutzschaltermitteln (2, 1) abzugeben, wenn das entfernte Statussignal darauf hinweist, daß die entfernten Leitungsschutzschaltermittel (1, 2) die ausgefallene Übertragungsleitung (11, 12 - - - 1n) und die Bereitschaftsleitung (11 - - - 1n) nicht geschaltet haben.

19. Endstation (A, B) nach Anspruch 13 oder 17, dadurch gekennzeichnet, daß die Hauptsignale ein Niedrigprioritätssignal enthalten, und daß die Endstation (A, B) weiter Mittel zum Übertragen des Niedrigprioritätssignals mit dem Hilfssignal über die Bereitschaftsleitung (11 - - - 1n) enthält.

20. Verfahren zum Übertragen von Haupt- und Hilfssignalen über ein digitales Trägerübertragungssystem mit Endstationen (A, B), die durch Übertragungsleitungen (11, 12 - - - 1n) verbunden sind, wobei die Übertragungsleitungen eine Bereitschaftsleitung (11 - - - 1n) enthalten, und das Verfahren den Schritt

Übertragen des Hauptsignals über die Übertragungsleitungen (11, 12 - - - 1n) enthält, gekennzeichnet durch die Schritte:

(a) Übertragen des Hilfssignals über wenigstens zwei der Übertragungsleitungen (11, 12 - - - 1n) einschließlich der Bereitschaftsleitung (11 - - - 1n);

(b) Empfangen der Haupt- und Hilfssignale von den Übertragungsleitungen (11, 12 - - - 1n) als ein empfangenes Hauptsignal und empfangene Hilfssignale; und

(c) Auswählen eines der empfangenen Hilfssignale als ein am besten empfangenes Hilfssignal.

**Revendications**

1. Système de commutation de protection pour une ligne de transmission à porteuse numérique transmettant des trames binaires en modulation par impulsions codées ayant une région binaire auxiliaire (H) comportant:

des stations terminales (A, B) comprenant chacune un sélecteur (33) pour recevoir des signaux auxiliaires et un dispositif de détection d'un dérangement sur la ligne de transmission à porteuse numérique;

au moins une ligne de transmission principale (11, 12 - - - 1n) connectée en fonctionnement auxdites stations terminales (A, B) pour transmettre des signaux principaux entre lesdites stations terminales (A, B);

un dispositif de détection d'un dérangement (TR) sur ladite au moins une ligne de transmission principale (11, 12 - - - 1n); et

au moins une ligne de secours (11 - - - 1n) connectée en fonctionnement auxdites stations terminales (A, B) pour transmettre le signal principal quand ledit dispositif (TR) détecte un dérangement sur ladite au moins une ligne de transmission principale (11, 12 - - - 1n), caractérisé en ce que le système est agencé de manière que les signaux auxiliaires entre lesdites stations terminales (A, B) sont transmis en parallèle en utilisant au moins deux lignes parmi ladite au moins une ligne de transmission principale (11, 12 - - - 1n) et ladite au moins une ligne de secours (11 - - - 1n), utilisant la région binaire auxiliaire (H) des trames binaires en modulation par impulsions codées et le sélecteur (33) sélectionnant les signaux auxiliaires reçus sur l'une de ladite ligne de secours (11 - - - 1n) et de ladite ligne de transmission principale (11, 12 - - - 1n) qui fonctionne normalement.

2. Système de commutation de protection selon la revendication 1, caractérisé en ce que les signaux auxiliaires entre lesdites stations terminales (A, B) contiennent un signal de commande.

3. Système de commutation selon la revendication 1 ou 2, caractérisé en ce que les signaux auxiliaires entre lesdites stations terminales (A, B) contiennent un signal de supervision.

4. Système de commutation de protection selon l'une quelconque des revendications 1 à 3 caractérisé en ce que les signaux auxiliaires entre lesdites stations terminales (A, B) contiennent un signal de maintenance téléphonique par fil d'ordre.

5. Système de commutation de protection selon l'une quelconque des revendications 1 à 4, caractérisé en ce que chacune desdites stations terminales (A, B) comporte en outre un contrôleur d'erreur (35) connecté en fonctionnement auxdites lignes de transmission principales (11, 12 - - - 1n) et aux lignes de secours (11 - - - 1n) pour comparer les signaux auxiliaires et sélectionner un meilleur signal.

6. Système de commutation de protection selon l'une quelconque des revendications 1 à 5, caractérisé par un dispositif de transmission d'un signal de basse priorité parmi les signaux principaux sur ladite ligne de secours (11 - - - 1n).

7. Système de commutation de protection selon l'une quelconque des revendications 1 à 6, caractérisé par un dispositif destiné à transmettre généralement un signal de basse priorité parmi lesdits signaux principaux sur ladite ligne de secours (11 - - - 1n) et pour transmettre le signal de basse priorité sur la ligne de transmission en dérangement quand ledit dispositif de détection (TR) détecte un dérangement dans la ligne de transmission en dérangement.

8. Système de commutation de protection pour une ligne de transmission à porteuse numérique comportant:

au moins une ligne de transmission principale (11, 12 - - - 1n) pour transmettre un signal principal;

au moins une ligne de secours (11 - - - 1n) pour transmettre des signaux comprenant des signaux de basse priorité et le signal principal lorsque l'une desdites au moins une ligne de transmission principale (11, 12 - - - 1n) est en dérangement; et

des stations terminales (A, B) pour émettre et recevoir le signal principal, chacune desdites stations terminales (A, B) comportant:

un dispositif de détection d'un dérangement (TR) sur ladite au moins une ligne de transmission principale (11, 12 - - - 1n);

un commutateur de protection de ligne (1, 2) connecté en fonctionnement auxdites lignes de transmission principales et de secours (11 - - - 1n) pour commuter lesdites lignes de transmission principales et de secours (11 - - - 1n), ledit commutateur de protection de ligne (1, 2) comprenant une borne (TB) pour émettre les signaux reçus par lesdites stations terminales (A, B) sur ladite ligne de secours (11 - - - 1n);

caractérisé par un générateur de faux signaux (5, 6) connecté en fonctionnement avec ledit commutateur de protection de ligne (1, 2) pour fournir à ladite ligne de secours (11 - - - 1n) un faux signal à émettre avec les signaux de basse priorité.

9. Système de commutation de protection selon la revendication 8, caractérisé en ce que chacun desdits commutateurs de protection de ligne (1, 2) comporte des éléments de commutation (1-1, 1-2 - - - 1-n; 2'-1, 2'-2 - - - 2'-n) connectés en fonctionnement auxdites lignes de transmission principale et de secours (11, 12 - - - 1n) qui sont identiques à la fois pour l'émission et la réception effectuées dans lesdites stations terminales (A, B).

10. Système de commutation de protection selon l'une quelconque des revendications 8 et 9, caractérisé en ce que chacune desdites stations terminales (A, B) comporte en outre une résistance de terminaison ($R_0$) connectée en fonctionnement à la borne (TB) qui émet des signaux émis sur ladite ligne de secours (11 - - - 1n).

11. Système de commutation de protection pour une ligne de transmission à porteuse numérique, comportant:

des lignes de transmission principales pour transmettre un signal principal;

au moins une ligne de secours (11 - - - 1n) pour transmettre le signal principal lorsque l'une desdites lignes de transmission principales (11, 12 - - - 1n) est en dérangement; et

des stations terminales (A, B) connectées en fonctionnement auxdites lignes de transmission principales et de secours (11, 12 - - - 1n) pour détecter un dérangement dans l'une en dérangement desdites lignes de transmission principales (11, 12 - - - 1n),

caractérisé en ce qu'une station de commande (A, B) parmi lesdites stations terminales (A, B) est agencée pour commuter celle en dérangement desdites lignes de transmission principales (11, 12 - - - 1n) sur ladite ligne de secours (11 - - - 1n) et pour commander simultanément une station terminale opposée (B, A) pour effectuer une opération de commutation de celle en dérangement desdites lignes de transmission principales (11, 12 - - - 1n) et ladite ligne de secours (11 - - - 1n), la station terminale opposée (B, A) étant agencée pour émettre un signal d'état vers la station de commande (A, B) qui commande l'opération de commutation, la station de commande (A, B) étant agencée pour inverser la commutation de celle défectueuse desdites lignes de transmission principales (11, 12 - - - 1n) et de ladite ligne de secours (11 - - - 1n) quand le signal d'état est reçu avec une indication que la station terminale opposée (B, A) n'a pas commuté celle défaillante desdites lignes de transmission principales (11, 12 - - - 1n) et de ladite ligne de secours (11 - - - 1n).

12. Système de commutation de protection selon la revendication 11, caractérisé en ce que, si le signal d'état indique que l'opération de commutation a échoué, la station terminale qui commande (A, B) commande celle opposée desdites stations terminales (B, A) pour retirer l'opération de commutation et, si l'opération de commutation échoue consécutivement deux fois, la station terminale de commande (A, B) qui commande l'opération de commutation interrompt l'opération de commutation puis inverse la commutation de celle défaillante desdites lignes de transmission principales (11, 12 - - - 1n) et de ladite ligne de secours (11 - - - 1n).

13. Station terminale (A, B) connectée en fonctionnement à au moins deux lignes de transmission (11, 12 - - - 1n) pour émettre et recevoir des signaux principaux et auxiliaires dans un système de transmission à porteuse numérique, l'une des lignes de transmission (11, 12 - - - 1n) servant de ligne de secours, ladite station terminale (A, B) comportant:

un dispositif de commutation de protection de ligne (1, 2)

caractérisé en ce que ledit dispositif de commutation de protection de ligne (1, 2) est agencé pour commuter le signal principal sur l'une principale desdites lignes de transmission (11, 12 - - - 1n) et le signal auxiliaire sur au moins deux des lignes de transmission (11, 12 - - - 1n) comprenant la ligne principale et la ligne de secours; et

un dispositif de commande de commutation de canal (3, 4) destiné à commander la commutation dudit dispositif de commutation de protection de ligne (1, 2).

14. Station terminale (A, B) selon la revendication 13 caractérisée en ce que ledit dispositif de commutation de protection de ligne (1, 2) comporte un sélecteur (33) connecté en fonctionnement aux lignes de transmission (11, 12 - - - 1n) pour sélectionner l'un des signaux auxiliaires à fournir audit dispositif de commande de commutation de canal (3, 4).

15. Station terminale (A, B) selon la revendication 14, caractérisée par un dispositif de contrôle d'erreur (35) destiné à contrôler le signal auxiliaire quant aux erreurs et pour commander ledit sélecteur (33).

16. Station terminale (A, B) selon l'une quelconque des revendications 13 à 15, caractérisée en ce que ladite station terminale (A, B) est connectée par des lignes de transmission (11, 12 - - - 1n) à une station terminale éloignée (B, A) qui produit un premier faux signal, ladite station terminale (A, B) comportant en outre:

un générateur de faux signaux (5, 6) connecté en fonctionnement audit dispositif de commutation de protection de ligne (1, 2) pour produire un second faux signal; et

une résistance de terminaison ($R_0$) pour terminer le premier faux signal, et

ledit dispositif de protection de ligne (1, 2) comportant:

des éléments de commutation identique (1'-1 - - - 1'-n; 2'-1 - - - 2'-n) connectés en fonctionnement auxdites lignes de transmission (11, 12 - - - 1n) pour commuter les signaux principaux et auxiliaires à transmettre et à recevoir; et une borne (TB) connectée en fonctionnement à ladite résistance de terminaison ($R_0$) pour émettre le premier faux signal vers ladite résistance de terminaison ($R_0$).

17. Station terminale selon l'une quelconque des revendications 13 à 16,

caractérisée en ce que ladite station terminale (A, B) est connectée, par les lignes de transmission (11, 12 - - - 1n) à une station terminale éloignée (B, A) comprenant un dispositif de commutation de protection de ligne éloigné (2, 1), et

ledit dispositif de commande de commutation de canal (3, 4) comportant:

un dispositif de détection de dérangement (TR) destiné à détecter un dérangement dans l'une défaillante des lignes de transmission (11, 12 - - - 1n);

un dispositif de commande de commutation de protection de ligne local (114) destiné à commander la commutation dudit dispositif de commutation de protection de ligne (1, 2) pour commuter celle défaillante des lignes de transmission (11, 12 - - - 1n) et la ligne de secours (11 - - - 1n);

un dispositif de commande de commutation de protection de ligne éloigné (113) destiné à commander la commutation du dispositif de commutation de protection de ligne éloigné (2, 1) pour commuter celle défaillante des lignes de transmission (11, 12 - - - 1n) et la ligne de secours (11 - - - 1n);

un dispositif d'état (119) destiné à recevoir des signaux d'état local et éloigné indiquant si la commutation de celle défaillante desdites lignes de transmission (11, 12 - - - 1n) et de la ligne de secours (11 - - - 1n) dans ledit dispositif de commutation de protection de ligne (1, 2) et le dispositif de commutation de protection de ligne éloigné (2, 1) s'est faite avec succès, et

un dispositif de traitement (110) connecté en fonctionnement audit dispositif de détection de dérangement (TR), lesdits dispositifs de commande commutation de protection local et éloigné (114, 113) et ledit dispositif d'état (119) pour commander les dispositifs de commande de commutation de protection de ligne local et éloigné (114, 113) commande simultanément ledit dispositif de commutation de protection de ligne (1, 2) et le dispositif de commutation de protection de ligne éloigné (2, 1) pour commuter celle défaillante des lignes de transmission (11, 12 - - - 1n) et la ligne de secours (11 - - - 1n) et pour inverser la commutation de celle défaillante des lignes de transmission (11, 12 - - - 1n) et la ligne de secours (11 - - - 1n) quand l'un des signaux d'état local et éloigné indique que la commutation s'est faite sans succès.

18. Station terminale (A, B) selon la revendication 17, caractérisée en ce que ledit dispositif de traitement (110) commande le dispositif de commande de commutation de protection de ligne éloigné (113) pour émettre une commande de retrait vers le dispositif de commutation de protection de ligne éloigné (2, 1) si le signal d'état éloignée indique que le dispositif de commutation de protection de ligne éloigné (1, 2) n'a pas réussi à commuter celle défaillante de la ligne de transmission (11, 12 - - - 1n) et de la ligne de secours (11 - - - 1n).

19. Station terminale (A, B) selon la revendication 13 ou 17, caractérisée en ce que les signaux principaux contiennent un signal de basse priorité et ladite station terminale (A, B) comportant en outre un dispositif pour émettre le signal de basse priorité avec le signal auxiliaire sur la ligne de secours (11 - - - 1n).

20. Procédé de transmission de signaux principaux et auxiliaires sur un système de transmission à porteuse numérique comprenant des stations terminales (A, B) connectées par des lignes de transmission (11, 12 - - - 1n), les lignes de transmission (11, 12 - - - 1n) comprenant une ligne de secours (11 - - - 1n), ledit procédé consistant

à émettre le signal principal sur les lignes de transmission (11, 12 - - - 1n); caractérisé en ce qu'il consiste également:

(a) à émettre le signal auxiliaire sur au moins deux des lignes de transmission (11, 12 - - - 1n) comprenant la ligne de secours (11 - - - 1n);

(b) à recevoir les signaux principaux et auxiliaires des lignes de transmission (11, 12 - - - 1n) comme un signal principal reçu et des signaux auxiliaires reçus; et

(c) à sélectionner l'un des signaux auxiliaires reçus comme un meilleur signal auxiliaire reçu.

# FIG.1

PRIOR ART

FIG. 2    PRIOR ART

STATION A

STATION B

0 142 138

# FIG.3a

PRIOR ART

STATION A                    STATION B

trigger ⟶

*switching command*

5ms

2ms  switch

5ms

*switching state signal*

switching
completed  2ms ⟶

# FIG.3b

STATION A                    STATION B

trigger ⟶

*switching command*

switching failed

*switching state signal*

retry

*retry command*

switching failed

*switching state signal*

stop
switching

3

# FIG. 4

STATION A

STATION B

0 142 138

# FIG.5

| SYS-1 | 4608 bits | | | | | | | | |
|---|---|---|---|---|---|---|---|---|---|
| F | H | $S_1$ | $S_2$ | $\bar{F}$ | $S_3$ | $S_4$ | $S_5$ | F |
| 576 bits | 576 | 576 | 576 | 576 | 576 | 576 | 576 | |

EP 84 113 522.1

FUJITSU LIMITED

# FIG.6

0 142 138

# FIG.7

SC signal line

LP switch

121 — line driver
122 — line receiver
119 — status monitor
120 — trigger detector

TR₁ TR₂ ...

117 — P/S converter
118 — S/P converter

113 — latch circuit
114 — latch circuit
115 — buffer
116 — buffer

data bus 124

110 CPU
111 — ROM
112 — decoder

address bus 123

# FIG.8a

STATION A — STATION B

trigger → switching

switching command

5ms

2ms switching

recognition

status signal

# FIG.8b

STATION A — STATION B

trigger → switching

switching command

switching failed

fail signal

retry

retry

switching failed

fail signal

return